# EUROPEAN PATENT SPECIFICATION

(11) **EP 0 235 274 B1**
(45) Date of publication and mention of the grant of the patent: **25.10.1995**
(21) Application number: 86905606.9
(22) Date of filing: 29.08.1986
(51) Int. Cl.: G01F 1/84

(54) **SENSOR MOUNTING FOR VIBRATING STRUCTURES**
SENSORMONTAGE FÜR SCHWINGENDE STRUKTUREN
MONTAGE DE CAPTEURS POUR STRUCTURES VIBRATOIRES

(30) Priority: 29.08.1985 US 770590; 22.05.1986 US 865715
(43) Date of publication of application: 09.09.1987
(60) Divisional application: 93200962.4
(73) Proprietor: MICRO MOTION INCORPORATED, Boulder Colorado 80301 (US)
(72) Inventor: CAGE, Donald, R., Longmont, CO 80501 (US); Lowe,Dean Edward, Boulder,Boulder Country,CO 80301 (US)
(74) Representative: Heunemann, Dieter, Dr.
(86) International application number: US8601799
(87) International publication number: WO8701444

(56) References cited:
- EP-A- 0 083 144
- WO-A-80/00389
- DE-A- 3 430 297
- FR-A- 2 394 065
- NL-A- 8 002 980
- US-A- 2 897 254
- US-A- 3 818 122
- US-A- 4 192 184
- US-A- 4 491 025
- US-E- 0 031 450
- ENGINEERING MATERIALS & DESIGN, vol. 29, no. 3, March 1985, page 25, Sutton, Surrey, GB; "Measuring mass flow using vibrating tubes"
- US Re. 31450

## Description

The invention relates to mounting electronic components on vibrating mechanical structures and providing electrical conductors for signal transmission between two structures, at least one of which is vibrating with respect to the other. In particular the invention has been found useful for Coriolis mass flow rate meters which include vibrating structures having electronic drive and sensor components mounted on the vibrating structures. The electrical conductors of the invention can be insulated with respect to each other and are arranged so that vibrations do not cause fatigue and breaking of the conductors and also minimizes coupling of mechanical forces and damping between the structures from which the conductors are mounted.

In the art of measuring mass flow rates of flowing substances it is known that flowing a fluid through a rotating or oscillating conduit induces Coriolis forces which act perpendicularly to both the velocity of the mass moving through the conduit and the angular velocity vector of the rotating or oscillating conduit. It is also known that the magnitudes of such Coriolis forces are related to both the mass flow rate passing through the conduit and the angular velocity of the conduit.

One of the major technical problems previously associated with efforts to design and make Coriolis mass flow rate instruments was the necessity either to measure accurately or control precisely the angular velocity of the conduit so that the magnitude of generated Coriolis forces could be determined and, therefrom, one could calculate the mass flow rate of the substance flowing through the conduit. Even if the angular velocity of the flow conduit could be determined or controlled, accurate determination of the magnitude of generated Coriolis forces was another technical problem previously associated with designing and making Coriolis mass flow rate instruments. This problem arises in part because the magnitude of generated Coriolis forces are very small, therefore resulting distortions of flow conduits which are oscillating or rotating are minute. Further, because of the small magnitude of the Coriolis forces, distortions of the conduit resulting from external sources such as invariably present vibrations induced, for example, by neighboring machinery or pressure surges in fluid lines cause erroneous determinations of mass flow rates. Such error sources may even completely mask the effects caused by generated Coriolis forces rendering the meter useless.

A mechanical configuration and measurement technique which, among other advances: (a) avoids the need to measure or control the magnitude of the angular velocity of a Coriolis mass flow rate instrument's flow sensing conduit; (b) concurrently provides requisite sensitivity and accuracy for the measurement of effects caused by generated Coriolis forces; and, (c) is not susceptible to errors resulting from external vibration sources, is taught in U.S. Patent Nos. Re 31,450, 4,422,338 and 4,491,025. The mechanical configuration disclosed in these patents incorporates curved flow sensing conduits which have no pressure sensitive sections, such as bellows or other pressure deformable portions. The curved flow sensing conduits are solidly cantilever mounted from the inlet and outlet ports of the conduits, e.g. welded or brazed, so that the conduits can be oscillated in spring-like fashion about axes which are located near the solidly mounted sections of the conduits. By further designing the mounted curved flow conduits so that they have resonant frequencies about the axes located near the solid mountings which are lower than the resonant frequencies about the axes which Coriolis forces act, a mechanical situation arises whereby the forces opposing generated Coriolis forces are predominantly linear spring forces. Oscillation of such a solidly mounted curved flow conduit while fluid is flowing through the flow conduit results in the generation of a Coriolis force couple. This Coriolis force couple is generated in two portions of the continuous flow conduit, to wit the portion where there is a velocity component of the fluid through the conduit directed toward the angular velocity vector, and the portion where there is a fluid velocity component directed away from the angular velocity vector. The Coriolis force couple opposed by a linear spring forces, twists or torques the curved conduit about an axis between the portions of the continuous flow conduit in which Coriolis forces are generated. The magnitude of the twisting or torquing is a function of the magnitudes of the generated Coriolis forces and the linear spring forces opposing the generated Coriolis forces.

The flow conduit in addition to being twisted by Coriolis forces is also being driven in oscillation. Accordingly, one of the portions of the continuous flow conduit on which the Coriolis forces are acting will be twisted so as to lead, in the direction in which the flow conduit is moving, and the other portion on which Coriolis forces are acting will be twisted so as to follow the first flow conduit section. The amount of time required for the twisted sections of the oscillating flow conduit to pass preselected points is a linear function of the mass flow rate of the fluid passing through the flow conduit. The relationship between the measured time and the mass flow rate passing through the flow conduit is only dependent on constants derived from the mechanics of the continuous flow conduit and its solid mounting. This relationship is not dependent on other variables which must be measured or controlled. Optical sensors are specifically described in U.S. Patent No. Re 31,450 and electromagnetic velocity sensors are specifically described in U.S. Patent Nos. 4,422,338 and 4,491,025 for making the required time measurements from which mass flow rates can be determined.

A double flow conduit embodiment with sensors for making the necessary time measurements is specifically described in U.S. Patent No. 4,491,025. The double flow conduit embodiment described in U.S. Patent No. 4,491,025 provides a Coriolis mass flow rate instrument configuration which is operated in a tuning fork manner as described in United States Reissue Patent Re 31,450. The tuning fork operation contributes to minimizing effects of external vibration forces. Minimizing effects of external vibration forces is important because these forces can induce errors in the required time measurement. This embodiment also provides for accurate determinations of fluid mass flow rates without being limited by vibrational forces which can be transmitted through the support where the flow conduits are solidly mounted. The vibrational forces transmitted through the support which are of concern here are those caused by the oscillation of the flow conduits. As the mass of flow conduits increase, the forces transferred to the support by oscillating the conduits similarly increase. Because the flow conduits are configured in, and oscillated in, a tuning fork arrangement, the forces arising in the support are of equal magnitude. The forces are directed predominantly against each other and therefore cancel.

The support for an instrument can include multiple structures as taught in United States Patent 4,491,025. In addition to welding or brazing the flow conduits to a first support structure, spacer bars, such as metal plates, can also be welded or brazed to adjacent portions of twin flow conduit embodiments at essentially equal distances from the first support structure. The combination of welding or brazing the flow conduits to the first support structure and to spacer bars results in an increase in the length of the flow conduit over which stress caused by oscillating the conduit is concentrated. This effective increase in the length of the flow conduit decreases the strain experienced by the flow conduit and therefore provides a configuration which is less likely to produce cracks in oscillating flow conduits. The use of spacer bars also results in movement away from the first support structure of the axis about which the flow conduits are oscillated.

Another problem associated with fabricating accurate Coriolis flow meters is the need to provide electrical conductors for signal transmission between the electrical components mounted from the vibrating flow conduits of Coriolis meters and the non-vibrating meter cases.

The arrangements for mounting wires for transmission of electrical signals between vibrating structures which are continuously vibrated are in part limited by several consequences arising from the vibration. Prolonged alternating motion of wires can cause the wires to experience fatigue which leads to their breaking, or can lead to their kinking which in combination with the cyclic motion exacerbates fatigue and causes the wires to break.

Another consequence of mounting wires from vibrating structures is that damping forces or driving forces can be coupled to the vibrating structures. Damping forces arise for example from (a) friction between wires or in some arrangements friction between the wires and adjacent structures (these frictional forces arise even when the insulating material on the wires is a synthetic resin polymer lubricating material such as is sold under the trademark Teflon), and (b) the internal structure of the material itself. Examples of driving forces include those which result from adjacent vibrating machinery. Coupling damping and driving forces to vibrating structures will alter the motion of the vibrating structures, which in many applications is an unacceptable consequence when unaltered vibrating motion of the structure is to be measured.

As an example of an attempt to compromise these problems, it has been known in the manufacture of Coriolis mass flow rate meters where flow conduits are continuously vibrated with respect to support structures that wires can be wrapped around the flow conduits from their base, where the flow conduits are solidly mounted to a support and not vibrated, up to locations on the vibrated flow conduits where the wires are connected to sensors and other electrical components. Wires can also be laid along the length of flow conduits and taped or glued to them.

Having wires wrapped or affixed, by tape or glue for example, to vibrating structures substantially precludes kinking problems because the wires are essentially kept in line and prevented from kinking by the structure to which they are mounted. As for the problem of fatigue, if the mechanical characteristics of the wires are at least equivalent to or even better than those of the vibrated structure, mechanical fatigue of the wires is a comparable engineering problem to that for the vibrated structure. However, these solutions, wrapping, taping or gluing, add additional mass to the flow conduits due to either the additional lengths in the conductors when wound around the flow conduits or the added tape and glue. This additional mass can alter the vibrating motion of the structure. In addition, because the effects of humidity and temperature on the glue and tape are not uniform, differential damping in the glue and tape can occur which can alter the vibrating motion of the structures. Thus, it would be advantageous to have an apparatus for electrically interconnecting vibrating structures that would provide for secure attachment of the conductors while minimizing the conductor length or the use of tape or glue.

Addressing the problem of minimizing the coupling of damping and driving forces to vibrating structures is a distinct problem from preventing kinking and fatigue. Continuing with the example of Coriolis mass flow rate meters, unless the wires are very light, such as 34 gauge and the structure about which it is wrapped is substantially more massive, such as a 2.54 centimeter (cm) diameter stainless steel flow conduit having a 0.3 cm wall thickness, the magnitude of coupled forces to the vibrating structure cannot necessarily be ignored. Another factor which can exacerbate the problem of forces being coupled to vibrating structures arises when wires are wrapped or in some way attached to more than one portion of a vibrating structure because the damping forces or driving forces coupled to the two portions may not be the same. Therefore, the sum of the different forces can cause the structure to twist.

Reducing the gauge of the wire used, tailoring the insulation on wires to minimize stiffness and friction, and using the most flexible but still temperature insensitive wire possible are readily available considerations engineers can make when faced with the problem of transmission of electrical signals along conductors mounted between vibrating structures. However, these specification considerations alone will not always be sufficient.

The necessity for generating angular velocity vectors about flow conduits of Coriolis mass flow rate instruments can result in unbalanced operation of the instruments. Oscillations of flow conduits will, if the flow conduits are not dynamically balanced, produce forces, both torque and translational, which can excite modes of oscillation in flow meter structures or couple oscillatory energy to other modes that introduce error signals in the determination of mass flow rates. Forces generated by oscillation of flow conduits must be either cancelled by opposing forces or effectively dampened at the locations where the flow conduits are mounted. Without due consideration to such problems in designing Coriolis mass flow rate instruments, impractical and even totally useless designs for attempting to measure mass flow rates can result.

Previously known designs for building dynamically balanced Coriolis mass flow rate meters include mounting two flow conduits, or one flow conduit and a dynamically matching spring structure, in essentially parallel fashion and driving them in oscillation, but 180 degrees out of phase with each other, so that the two flow conduits, or one flow conduit and matching spring structure, oscillate as the tines of a tuning fork; see U.S. Patents Re 31,450, 4,192,184, 4,311,054 and 4,491,025. Such oscillation of two structures can result in the generation at the mounting points of the respective paired structures of forces which are both equal and opposite in direction. The effectiveness of these designs is exemplified, inter alia, by commercial Coriolis mass flow rate meters built in conformity with U.S. Patent 4,491,025 which provide accurate measurements to ± 0.4% of mass flow rate. Measurements of fluid mass flow at such accuracies had not been achievable with commercial equipment prior to the introduction of devices described and claimed in United States Patent Re 31,450.

Ideally dynamic balancing of the two flow conduit configurations requires both flow conduits to have essentially identical spring constants and to have essentially identical rotational inertia about the axes from which the flow conduits are oscillated. This condition was substantially approximated in the above-mentioned commercial equipment using essentially identically shaped flow conduits of the same weight and made from the same material without considering in detail the contributions to rotational inertia of the mechanisms attached to the flow conduits. Such attached mechanisms included the drive mechanism for exciting the flow conduits into oscillation and the sensor systems used to measure Coriolis force induced effects. The contributions to rotational inertia of attachments to flow conduits were heretofore deemed not consequential, in part, because the attachments were symmetrically mounted. The drive mechanism was mounted at a location essentially halfway between the sections of the flow conduit in which the Coriolis forces are generated and each of two sensor systems was mounted at an essentially symmetrical location with respect to the other on each of the sections of the flow conduit where Coriolis forces act. Such mounting of attachments to flow conduits, however, has now been found not to provide ultimate dynamic balancing because the positioning of the drive mechanisms or sensor systems on a flow conduit can create centers of gravity which are displaced from the flow conduit so that a primary mode of oscillation would exist where the attached mass oscillates about the flow conduit causing flexure in torsion. In the known commercial meters referred to above, therefore, oscillations of attached mechanisms about the flow conduit, for example the sensor systems, can cause some error in measured signals. Generation of unequal forces at the base of oscillating flow conduits has also been encountered when the centers of gravity for attached mechanisms on one of the flow conduits are not at the same distance from the axis about which the flow conduit is oscillated as the centers of gravity of mechanisms attached to the other flow conduit. Again, such unequal forces have been found to vibrate the meter structure so that many modes of oscillation can be excited.

For many commercial applications the magnitude of the unbalanced forces caused by such mounting of sensors and drive mechanisms is negligible in comparison to the substantial forces caused by the oscillation of the much more massive flow conduits. For others, where greater accuracy of mass flow measurements is a consideration, the present invention supplies more nearly ideal dynamic balancing and thus enables greater precision and accuracy than heretofore attained with meters of the same general type.

According to the present invention, there is provided an apparatus for measuring the mass flow rate of a fluid having two flow conduits mounted for oscillation of a length of each of said flow conduits through which the fluid to be measured is flowed, comprising
a) a first sensor means for detecting Coriolis force induced distortions of said flow conduits, said first sensor means having at least two sensor means components;
b) a second sensor means for detecting Coriolis force induced distortions of said flow conduits, said second sensor means having at least two sensor means components;
c) a first beam to which are attached at opposite ends a first sensor means component and a second sensor means component;
d) a second beam to which are attached at opposite ends a first sensor means component and a second sensor means component;
e) means for attaching said first beam to a first flow conduit so that the locations where said first beam is attached to said first flow conduit are at substantially equal first distances from the axis about which said first flow conduit is forced to oscillate;
f) means for attaching said second beam to a second flow conduit so that the locations where said second beam is attached to said second flow conduit are at substantially equal second distances from the axis about which said second flow conduit is forced to oscillate;
g) the center of gravity of said first beam in combination with said first and second sensor means components is positioned substantially on the axis about which generated Coriolis forces act; and
h) the center of gravity of said second beam in combination with said first and second sensor means components is positioned substantially on the axis about which generated Coriolis forces act;

characterised in that
(A) said first sensor means components have substantially equal masses;
(B) said second sensor means components have substantially equal masses;
(C) said second beam has a mass substantially equal to that of said first beam;
(D) said first distances and said second distances are substantially equal; and
(E) said centers of gravity respectively lie at equal distances from the respective axes about which the conduits are forced to oscillate.

According to another aspect of the present invention, there is provided a method of constructing an apparatus for measuring the mass flow rate of a fluid comprising two sensor systems, each having two sensor components for detecting Coriolis forces, said apparatus also comprising two flow conduits, each mounted to permit a length thereof to oscillate (a) about a first axis for said flow conduit and (b) as one tine of a tuning fork in cooperation with the other flow conduit about a second axis, which is the axis about which the conduit is forced to oscillate, one of the two sensor components from each sensor system being mounted on a respective one of two beam structures such that the respective aggregate centers of gravity for each of said beam structures with two mounted sensor components is positioned substantially on the first axes of the attached flow conduits about which generated Coriolis forces act when fluid is flowing through the conduits, characterised by attaching each of the resulting beam structures with two sensor components mounted thereon to a respective one of said flow conduits in a manner such that the respective aggregate centers of gravity of said beam structures with mounted sensor components thereon, lie at equal distances from the respective axes about which the lengths of the attached conduits are forced to oscillate.

By a unique sensor system design, the positioning of the masses of the components for not only the drive mechanism and beam structure but also the sensor systems can be distributed so that when mounted on a flow conduit the center of gravity of the beam structure with its affixed components is essentially located on the axis about which Coriolis forces distort the flow conduit. So configuring flow conduits and associated components for the drive mechanism, sensor systems and their mounting hardware assures maximum distortion of the flow conduit by generated Coriolis forces at the sensor system locations and minimum distortions caused by torques resulting from the configuration for mounting attachments to the flow conduits. This minimization of error inducing distortions results from the center of gravity for the attachments to the flow conduits being essentially located on the axes about which the generated Coriolis forces distort the flow conduit. Accordingly, no moment is provided for generating torques caused by the masses attached to oscillating flow conduits.

In addition to locating the centers of gravity for attachments to flow conduits on the axes about which the generated Coriolis forces distort the flow conduits, the rotational inertias for the attachments are selected so that the resonant frequency about the axes which the generated Coriolis forces acts is both higher and not a harmonic of the resonant frequency about the axes which the conduits are driven in oscillation.

Such mounting on flow conduits of drive mechanism components and sensor system components has improved the zero stability of Coriolis mass flow rate instruments by a factor of ten.

Without compromising solutions for preventing wire breaking and coupling of forces to vibrating structures, it is possible to overcome deficiencies of prior methods for mounting wires between vibrating structures, and in particular the mounting of wires in Coriolis mass flow meters.

All wires for conducting electrical signals from vibrating structures according to the apparatus of the present invention are transmitted using wires mounted at one end to one of the structures and mounted at the other end to the other structure with the sections of the wires between the mounted ends being maintained in free suspension. The wires are shaped in the space between their mountings in a half-loop shape. The half-loop shape permits rolling motions for the wires about axes essentially perpendicular to the line between the locations on the structures where the wires are mounted. This half-loop shape and rolling motion prevents kinking and avoids bending which both accelerate fatigue and fracture.

To minimize coupling of any forces either damping or driving to vibrating structures the wires are mounted from the vibrating structures at essentially the axes defined by deflection of the vibrating structures. In particular, the deflection axes chosen are those having the shortest distances from the intersection on the structure of the deflection axes to where the wires must be connected to the electrical components on the structures. So mounting the wires minimizes the moment arms from the axes to the wires and therefore minimizes coupling of external force effects to the vibrating structures.

Use of suspended half-loop shapes for wires, and mounting wires adjacent deflection axes has been disclosed for Coriolis mass flow rate meters; see United States Patent Application Serial No. 770,573, High Temperature Coriolis Mass Flow Rate Meter, filed August 29, 1985; which has been assigned to the assignee of the present invention.

Maintaining a half-loop shape for a suspended flexible circuit section is a difficult task. If the half-loop shape is not continuously maintained, the suspended section can transition to another shape, such as an "S" shape. The transition to another shape or periodic transitioning between shapes will invariably cause kinking or fatigue as the flexible circuit is vibrated. It is a purpose of the prevent invention to assure continuous maintenance of only the half-loop shape for the flexible circuit.

A preferred embodiment for the present invention utilizes a flexible circuit with multiple conductors. Adjacent each end where the flexible circuit is mounted, the flexible circuit increases in width from the width in the region where the wires are maintained in the half-loop shape. The increased widths assures maintenance of the half-loop shape thus preventing kinking and fatigue of the flexible circuit between the mounted ends. Alternate embodiments include providing the flexible circuit with a sheet metal layer or metallized layer that can be used to spot weld the flexible circuit to the vibrating structure.

Specific embodiments of the present invention are now described, by way of example only, with reference to the accompanying drawings, in which:-
FIG. 1 is a perspective view of a Coriolis mass flow rate meter according to the present invention;
FIG. 2 is a perspective view of a Coriolis mass flow rate meter as previously known in the art;
FIG. 3 is a sectional view of a velocity sensor according to the present invention;
FIG. 4 is a front plan view of a Coriolis mass flow rate meter as shown in FIG. 1;
FIG. 5 is a side plan view of a Coriolis mass flow rate meter as shown in FIG. 1;
FIG. 6 is a perspective of a Coriolis mass flow rate meter according to the present invention showing in more detail a preferred embodiment for the flexible circuit;
FIG. 7 is a front view of the flexible circuit shown in FIG. 6;
FIG. 8 is a sectional view of the flexible circuit shown in FIG. 7 taken along line 8-8;
FIG. 9 is a sectional side view of a Coriolis mass flow rate meter as shown in FIG. 6;
FIG. 10 is a sectional view of the flexible circuit as shown in FIG. 7 taken along line 10-10.

Corresponding components are designated by the same reference numerals throughout the various figures.

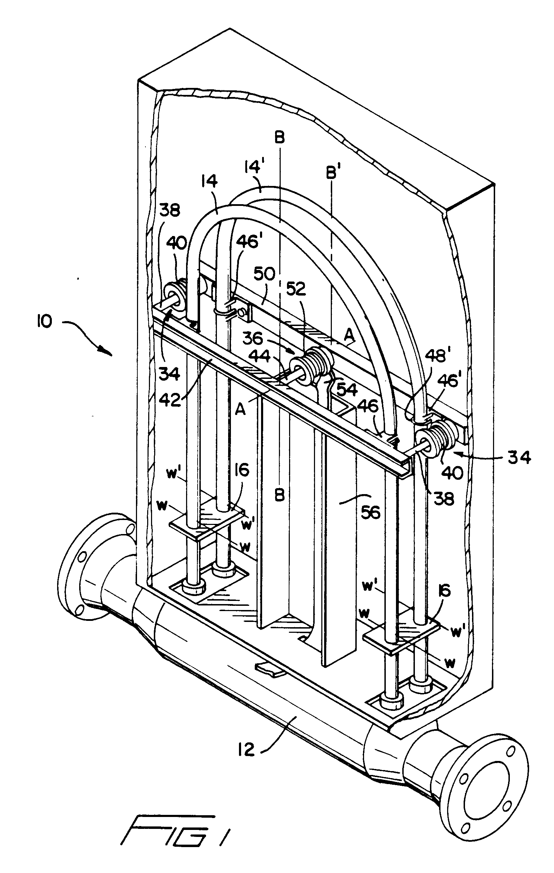

Referring now to the drawings, a Coriolis mass flow rate instrument according to the invention is illustrated in FIG. 1 where it is generally designated by reference numeral 10. Measuring device 10 includes pipe 12 from which two curved flow conduits 14 and 14′ are cantilever mounted in substantially parallel fashion. Both flow conduits 14 and 14′ are fabricated from continuous tubing and are free of pressure sensitive joints. Fixedly attached to both flow conduits 14 and 14′ are supports 16 which in combination with pipe 12 provide a cantilever mounting for flow conduits 14 and 14′. The flow conduits 14 and 14′ are selected and mounted so as to have substantially the same rotational inertia and the same spring constants about oscillation axes, W-W and W′-W′, which are located substantially about supports 16. Since the flow conduits 14 and 14′ are cantilever mounted in an essentially parallel fashion with free ends and have substantially equal rotational inertias and equal spring constants about their respective oscillation axes, W-W and W′-W′, these flow conduits, 14 and 14′, can be driven in opposition with respect to each other about these oscillation axes, W-W and W′-W′, at essentially the same resonant frequency so as to function as the tines of a tuning fork.

Also necessary for the function of a Coriolis mass flow rate instrument is a mechanism for driving the flow conduits 14 and 14′ in an oscillatory fashion and sensor systems for measuring the effects caused by generated Coriolis forces. Both the drive mechanism and the sensor systems, preferably velocity sensors, can be configured using permanent magnets positioned adjacent coils of wire (see U.S. Patent Nos. 4,422,338 and 4,491,025).

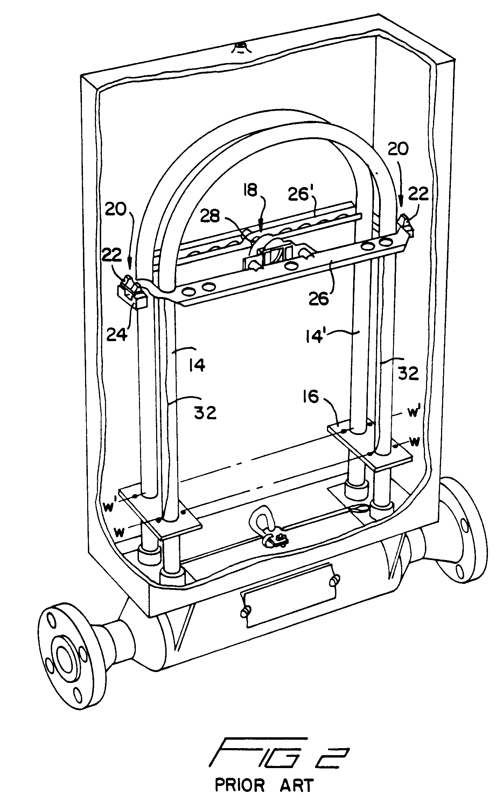

A previously known arrangement for mounting a drive mechanism 18 and a set of velocity sensors 20 is shown in FIG. 2. An arrangement of this general type is known from Engineering Materials and Design, vol. 29, no. 3 March 1985, page 25, Sutton, Surrey, GB "Measuring mass flow using vibrating tubes". The velocity sensors 20 as shown in FIG.2, include coils 22 and horseshoe magnets 24 which are configured with respect to each other so that the coils 22 move within essentially uniform magnetic fields produced at both pole faces of the magnets 24 when the flow conduits 14 and 14′ are driven in oscillation by drive mechanism 18. The velocity sensors 20 and the drive mechanism 18 are attached to flow conduits 14 and 14′ by mounting the various components to the beams 26 and 26′ and then attaching the beams 26 and 26′ to the flow conduits 14 and 14′. The beams 26 and 26′ are mounted on the flow conduits 14 and 14′ at equal distances from their respective oscillation axes, W-W and W′-W′, however, because the horseshoe magnets 24 for velocity sensors 20 are mounted closer to their oscillation axis W′-W′ than are the coils 22 the centers of gravity for the horseshoe magnets 24 and the coils 22 are substantially displaced from having equal distances to their oscillation axes, W′-W′ and W-W. This displacement of the centers of gravity and the inherent mass differences between horseshoe magnets 24 and coils 22 results in rotational inertias for velocity sensors 20 which accordingly produce different rotational inertias for flow conduits 14 and 14′ that cause flow conduits 14 and 14′ to be dynamically unbalanced. Aggregate differences in rotational inertias for the magnets 24, coils 22, drive mechanism 18 with its magnet 28 and coil 30, and beams 26 and 26′ can be somewhat reduced, for this configuration, by designing the mass of beam 26 with the masses of coils 22 and 30 to be essentially equal to the mass of beam 26′ with the masses of magnets 24 and 28. However, because of the mounting configuration for velocity sensors 20 the center of gravity of beam 26′ with its attached coils 22 and 30 is further displaced from its oscillation axis W-W than is the center of gravity of beam 26′ with its attached magnets 24 and 28 from oscillation axis W′-W′. With equal masses but different distances from their oscillation axes rotational inertia differences will therefore still exist between flow conduit 14 with attached beam 26 and flow conduit 14′ with its beam 26′.

Additionally, degrading the dynamic equivalence of flow conduits 14 and 14′ in the meter shown in FIG. 2 is the affixing of wires 32 to flow conduit 14 to provide electrical energy to the coil 30 of drive mechanism 18 and to transmit signals from the coils 22 of the velocity sensors 20. The affixing of wires 32 to flow conduit 14 invariably alters the dynamics of flow conduit 14 to be different from flow conduit 14′.

The configuration for a drive mechanism 36 and unique velocity sensors 34, and their attachment to flow conduits 14 and 14′ in accordance with the present invention is shown in FIG. 1. The new velocity sensors 34 and their mounting overcomes the dynamic deficiencies of the embodiment in FIG. 2 and results in the rotational inertia for both flow conduits 14 and 14′ with respect to the oscillation axes, W-W and W′-W′, to be essentially equal and therefore the dynamics of flow conduits 14 and 14′ to be essentially equal.

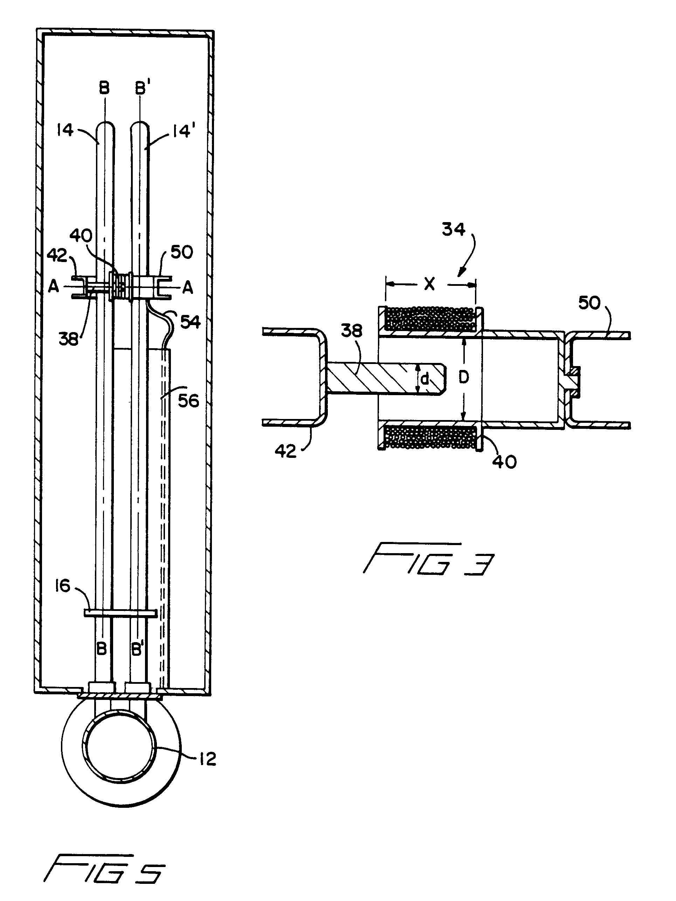

To insure the dynamic balancing of the Coriolis mass flow rate meter 10 shown in FIG. 1 the velocity sensors 34 are configured so as to have essentially equal masses for the magnets 38 and the coils 40, and to have the aggregate centers of gravity for the magnets 38 and the coils 40, when mounted on the flow conduits 14 and 14′ to be at essentially the same distances from the oscillation axes, W-W and W′-W′, and to be located on the axes, B-B and B′-B′, about which the Coriolis forces act. The configuration for velocity sensors 34 is shown in FIG. 3. Instead of using a horseshoe magnet, the velocity sensors 34 of the preferred embodiment of the present invention uses a bar magnet 38 which is mounted so that the magnetic field of only one pole interacts with the coil 40. To assure, as required for velocity sensors 34 for Coriolis mass flow rate meters of the present invention, that the coils 40, when flow conduits 14 and 14′ are oscillated, only intersect an essentially uniform magnetic field generated by magnets 38, the diameter of magnets 38, i.e., d, can be designed to be no more than one half the diameter of the open interior of coils 40, i.e., D, and preferably this relationship is less than one half. Further, the relative movement of magnets 38 with respect to coils 40, as caused by oscillation of flow conduits 14 and 14′ and Coriolis force induced distortion, can be designed to be one half or less than the longitudinal extent, i.e., x, of the windings 41 of coils 40.

With the above configuration for velocity sensors 34 a beam 42 can be assembled with bar magnets 38 for velocity sensors 34 affixed at each end of the beam 42. At the center of the beam 42 a third bar magnet 44 for drive mechanism 36 is affixed. The beam 42 is then attached to a first flow conduit 14 so that the distances from the oscillation axis, W-W, to the sections of flow conduit 14 where the beam 42 is attached to flow conduit 14 are essentially equal. Semi-circular supports 46 and threaded U rings 48 are used to attach beam 42 to flow conduit 14. The semi-circular supports 46 are designed so as to maintain the distance of the beam 42 from the flow conduit 14 such that the center of gravity for the aggregate configuration of the beam 42 and the attached magnets 38 and 44, is located along the central axis, A-A of drive mechanism 36, and is also positioned on the axis, B-B (see FIG. 1) about which Coriolis forces generated by the combination of oscillating flow conduit 14 about the oscillation axis, W-W, and flowing a substance through flow conduit 14 act. This assures that the combination of the rotational inertias resulting from oscillation of flow conduit 14 with the affixed beam 42 and its attachments generate no torques which introduce errors into the measurement of the Coriolis forces acting on flow conduit 14.

A second beam 50 can also be assembled in accordance with the above described configuration for velocity sensors 34 where the coils 40 for velocity sensors 34 are affixed at each end of the beam 50. At the center of the beam 50 a third coil 52 for drive mechanism 36 is affixed. The beam 50 is then attached to a second flow conduit 14′ so that the distances from the oscillation axis, W′-W′, to the sections of flow conduit 14′ where the beam 50 is attached to flow conduit 14′ are essentially equal. Semi-circular supports 46′ and threaded U rings 48′ are used to attach the beam 50 to the flow conduit 14′. The semi-circular supports 46′ are designed so as to maintain the distance of the beam 50 from the flow conduit 14′ such that the center of gravity for the aggregate configuration of the beam 50 and the attached coils 40 and 52, is located along the central axis, A-A, of drive mechanism 36, and is also positioned on the axis, B′-B′ (see FIG. 1), about which Coriolis forces generated by the combination of oscillating flow conduit 14′ about the oscillation axis, W′-W′, and flowing a substance through flow conduit 14′ act. This assures that the combination of the rotational inertias resulting from oscillation of flow conduit 14′ for the beam 50 and its attachments generate no torques which introduce errors into the measurement of the Coriolis forces acting on flow conduit 14′.

Velocity sensors configured about horseshoe magnets where both pole faces are used can be mounted in conformity with the present invention if the masses of the magnets and the coils are equal and if the centers of gravity for both the first beam 42 and the second beam 50 with these attachments are located on the respective axes, B-B and B′-B′, about which generated Coriolis forces act.

The distances from the axes, B-B and B′-B′, about which the generated Coriolis forces act to the coils 40 and magnets 38 for velocity sensors 34 mounted on the beams, 42 and 50, are selected so that the rotational inertias for the attachments to flow conduits 14 and 14′ maintains the resonant frequency of the flow conduits 14 and 14′ at a higher value than the resonant frequency about the oscillation axes, W-W and W′-W′, but not in a harmonic relationship. A harmonic relationship for these two resonant frequencies results in a synchronous sampling of errors which causes zero shift, while a non-harmonic relationship results in random sampling and therefore a nulling of error signals over a finite number of samplings.

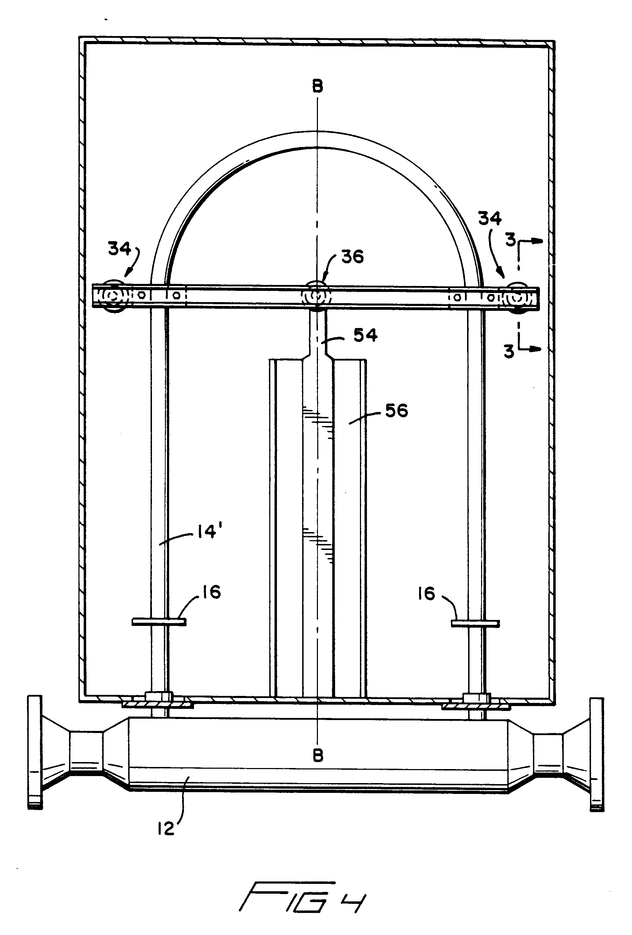

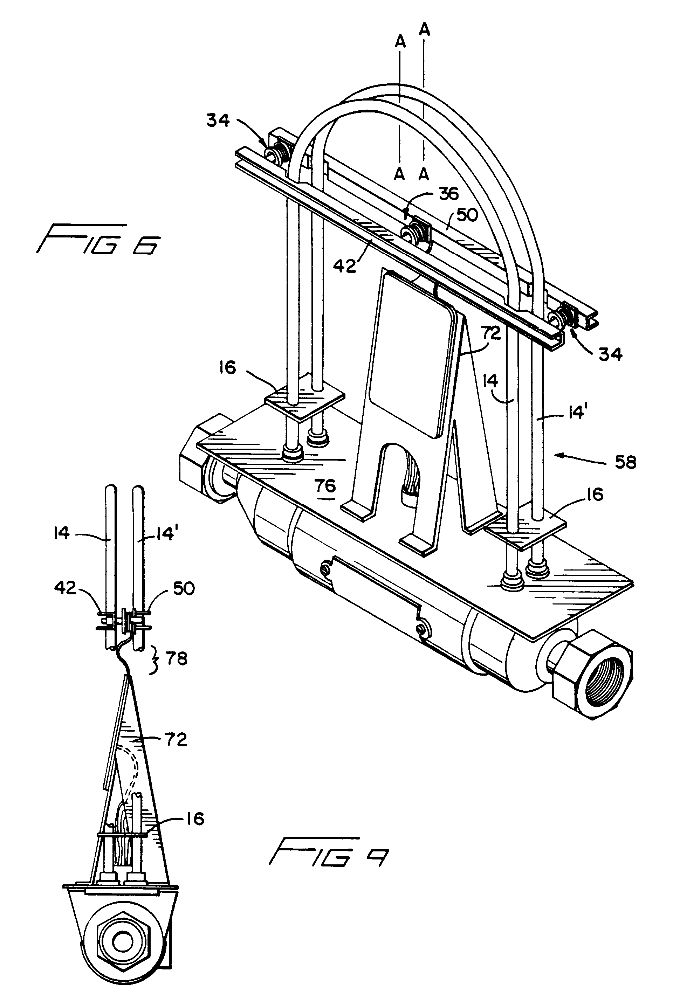

A further requirement for coils 40 and 52 mounted on beam 50 is the necessity to provide electrical current to the coil 52 of drive mechanism 36 and to transmit signals from the coils 40 of velocity sensors 34. For one preferred embodiment a flat flexible ribbon 54 with multiple electrical conductors as known in the art is used. The flat flexible ribbon 54 is supported by a beam 56 so that the flat flexible ribbon 54 can be attached to the beam 50 at the location of the drive mechanism 36 coil 52. The flat flexible ribbon 54 is oriented with respect to the beam 50 so that as the flow conduit 14′ is oscillated the flat flexible ribbon 54 introduces minimum drag on the flow conduit 14′. Minimizing drag is assured by having the flat flexible ribbon 54 not mounted in a straight line configuration from the beam 56 to the drive mechanism 36 but in a half-loop shape so as to be free to oscillate with the flow conduit 14′, see FIG. 5. Further, the attachment of the flat flexible ribbon 54 to the beam 50 at the location of the central coil 52 assures that the central axis of the flat flexible ribbon 54 lies essentially coincident with the axis B-B (see FIG. 4), of flow conduit 14′ about which Coriolis forces act so that the contribution of torques from the flat flexible ribbon 54 are minimized.

Application of a flat flexible ribbon with a half-loop shape for use on only Coriolis mass flow meters is not to be understood as the only use for such flat flexible ribbons. The flat flexible ribbons with half-loop shapes can in fact as would be understood in the art, be used on any electromechanical structure where electrical signals are to be transmitted between vibrating structures.

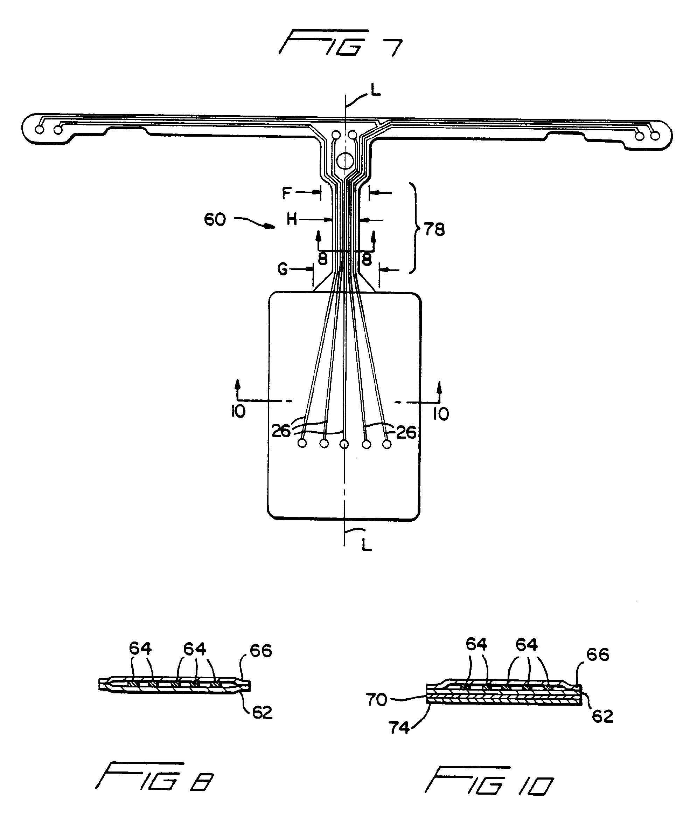

Use of another preferred embodiment of a flat flexible ribbon embodiment with a half-loop shape on a Coriolis mass flow rate meter 58 is shown in FIG. 6. The Coriolis mass flow rater meter 58, for purposes of understanding the invention, includes two continuous flow conduits 14 and 14′, which are driven to vibrate by a drive mechanism 36. The components of the drive mechanism 36 are connected to the flow conduits 14 and 14′ by beams 42 and 50. Also mounted on the beams 42 and 50 are the components for two velocity sensors 34. As explained above, coupling of damping and driving forces to the flow conduits 14 and 14′ must be minimized.

The flat flexible ribbon used in FIG. 6 is a flexible circuit 60 (see FIG. 7) which can be built up from a synthetic insulating reinforcement layer 62 such as sold under the trademark Kapton (see FIG. 8) with rolled annealed copper conductors 64 laid on the reinforcement layer 62. Over the copper conductors 64 another synthetic insulating cover layer 66 can then be laid. The reinforcement and cover layers (62 and 68) are thin, for example, on the order of 0.12 and 2.5 thousandths of a centimeter, so as to be flexible. Accordingly, the copper conductors 64 are also very thin, for example, 3.5 thousandths of a centimeter.

The flexible circuit 60 can be mounted to the Coriolis mass flow rate meter 58 by use of a pressure sensitive external adhesive 70, as known in the art, which is laid down on the reinforcement layer 62 on those regions of the flexible circuit 60 where the flexible circuit 60 will be in contact with structures of the Coriolis mass flow rate meter 58 such as on the stationary support 72 or along the beams 42 and 50. Prior to mounting the flexible circuit 60 a release liner 74, as is also known in the art, is laid over the pressure sensitive external adhesive 70 to protect it. (See FIG. 10.)

Alternate means for fastening the flexible circuit to the beams 42 and 50 include providing a metallized layer or a thin sheet metal layer in lieu of or in conjunction with the adhesive layer 70. When used, the metallized layer could be secured to the beams 42 and 50 by spot welding or soldering. Where both an adhesive layer and a metallized layer are used, the adhesive layer would be used to position the flexible circuit 60 until the spot welding or soldering was finished. Alternatively, the portions of the flexible circuit 60 along the beams 42 and 50 could be provided with holes through which screws, spot welded retainers or tabs, or other conventional fasteners could be inserted and which would extend into correspondingly positioned holes in the beams 42 and 50.

For a preferred embodiment of the invention as used on the Coriolis mass flow rate meter 58, the electrical signals from the drive mechanism 36 and velocity sensors 34 on the Coriolis mass flow rate meter 58 are transmitted via flexible circuit 60 between a beam 50 attached to vibrating flow conduits 14 and 14′ and a stationary support 72 mounted on the base 76 of the Coriolis mass flow rate meter 58. The flexible circuit 60 is mounted so that a throat section 78 of the flexible circuit 60 in which the necessary number of copper conductors 64 are laid out substantially parallel to each other and as closely spaced from each other as is convenient is positioned or suspended in the space between the beam 50 and the stationary support 72.

The length of the throat section 78 of the flexible circuit 60 is greater than the rectilinear distance between beam 50 and the stationary support 72. Therefore, the throat section 78 will, as a first shape, form a half-loop shape between the beam 50 and the stationary structure 72 (see FIG. 9). Other shapes could possibly be formed such as an "S" shape. All shapes other than a half-loop shape, however, are not preferred. For shapes other than the half-loop shape, care must be taken to assure that shape of the throat section 78 cannot transition between alternate shapes. For example, an S-shaped section could transition between the half-loop shape and its S-shape. Further, no sharp bends can be allowed to be formed along the length of the throat section 78 of the flexible circuit 60 because sharp bends when repeatedly vibrated by the relative motion between the stationary support 72 and the beam 50 will lead to fatigue breaking of the copper conductors 64, the reinforcement layers 62, or both.

The half-loop shape of the throat section 78 results in a rolling motion or a wave-like motion of the flexible circuit 60 as the beam 50 moves with respect to the stationary support 72. To continuously maintain the half-loop shape and preclude sharp bends from forming in the regions adjacent the locations where the flexible circuit 60 is mounted, the widths, F and G, of the portions of the suspended flexible circuit 60 are increased from the width, H, of the throat section 78 prior to the two locations where the flexible circuit 60 is fixedly mounted. This increases the stiffness of the flexible circuit 60 over that of the throat section 78. This increase in stiffness assures maintenance of the half-loop shape within the region of the throat section 78 and prevents sharp bending adjacent the mounting locations of the flexible circuit 60. The transition from width H to width F and that from width H to width G should not be abrupt but should be a gradual, smoothly, outwardly tapering area along each of the lateral edges of the flexible circuit 60 as shown in FIG. 7. Preferably, these outwardly tapering regions occur in an essentially symmetrical fashion about the longitudinal centerline L-L. With an abrupt transition at the points of attachment, the flexible circuit 60 would flex like a hinge at the points of attachment, which, in turn, would concentrate stress in a highly localized region that would fatigue the conductors 64. The increased stiffness, however, does not increase coupling of forces to the flow conduit 14′. The force components which result from the increased stiffness are directed to preventing sharp bending, such as would cause creasing, of the flexible circuit 60 adjacent the fixed mountings and maintaining of the half-loop shape that minimizes the coupling of forces to the flow conduit 14′. Coupling of forces to flow conduit 14′ is most effectively accomplished by flexible circuit 60 when the damping or driving forces are aligned parallel to the longitudinal axis L-L (see FIG. 7) of flexible circuit 60. This would result in a pulling or pushing of the flexible circuit 60 in a straight line. However, because of the half-loop shape in the region of the throat section 78, the flexible circuit 60 is prevented from aligning forces along longitudinal axis L-L of the flexible circuit 60.

The above discussion and related illustrations of the present invention are directed primarily to preferred embodiments and practices of the invention. Numerous changes and modifications in the actual implementation of the concepts described herein will be apparent to those skilled in the art, and it is contemplated that such changes and modifications may be made without departing from the scope of the invention as defined by the following claims.

## Claims

1. An apparatus (10) for measuring the mass flow rate of a fluid having two flow conduits (14,14′) mounted for oscillation of a length of each of said flow conduits (14, 14′) through which the fluid to be measured is flowed, comprising
a) a first sensor means (34) for detecting Coriolis force induced distortions of said flow conduits (14,14′), said first sensor means (34) having at least two sensor means components (38,40);
b) a second sensor means (34) for detecting Coriolis force induced distortions of said flow conduits (14,14′), said second sensor means (34) having at least two sensor means components (38,40);
c) a first beam (50) to which are attached at opposite ends a first sensor means component (40) and a second sensor means component (40);
d) a second beam (42) to which are attached at opposite ends a first sensor means component (38) and a second sensor means component (38);
e) means for attaching said first beam (50) to a first flow conduit (14′) so that the locations where said first beam (50) is attached to said first flow conduit (14′) are at substantially equal first distances from the axis (W′-W′) about which said first flow conduit (14′) is forced to oscillate;
f) means for attaching said second beam (42) to a second flow conduit (14) so that the locations where said second beam (42) is attached to said second flow conduit (14) are at substantially equal second distances from the axis (W-W) about which said second flow conduit (14) is forced to oscillate;
g) the center of gravity of said first beam (50) in combination with said first and second sensor means components (40) is positioned substantially on the axis (B′-B′) about which generated Coriolis forces act; and
h) the center of gravity of said second beam (42) in combination with said first and second sensor means components (38) is positioned substantially on the axis (B-B) about which generated Coriolis forces act;
characterised in that
(A) said first sensor means components (38,40) have substantially equal masses;
(B) said second sensor means components (38,40) have substantially equal masses;
(C) said second beam (42) has a mass substantially equal to that of said first beam (50);
(D) said first distances and said second distances are substantially equal; and
(E) said centers of gravity respectively lie at equal distances from the respective axes (W-W, W′-W′) about which the conduits are forced to oscillate.

2. An apparatus as set forth in claim 1 in which a drive coil (52) is attached in the middle of said first beam (50) so that the center of gravity of said first beam (50) in combination with said first and second sensor means components (40) and said drive coil (52) is positioned substantially on the axis (B′-B′) about which generated Coriolis forces act, and a drive magnet (44), having a mass essentially equal to the mass of said drive coil (52), is attached in the middle of said second beam (42) so that the center of gravity of said second beam (42) in combination with said first and second sensor means components (38) and said drive magnet (44) is essentially positioned on the axis (B-B) about which generated Coriolis forces act.

3. An apparatus as set forth in claim 1 in which said first sensor means (34) includes a first sensor magnet (38) and a first sensor coil (40), said first sensor coil (40) and said first sensor magnet (38) having substantially equal masses; and, said second sensor means (34) includes a second sensor magnet (38) and a second sensor coil (40), said second sensor coil (40) and said second sensor magnet (38) having substantially equal masses.

4. An apparatus as set forth in claim 3 in which only one pole of a sensor magnet (38) enters a sensor coil (40) and generates an electrical signal in said sensor coil (40).

5. An apparatus as set forth in claim 1 in which the locations of said first and second sensor means components (38,40) are selected on both said first and second beams (42,50) so that the resonant frequency of said first and second flow conduits (14,14′) about the axes (B-B, B′-B′) where generated Coriolis forces act is higher than, and not a harmonic of, the resonant frequency about the axes (W-W, W′-W′) which said first and second flow conduits (14,14′) are driven in oscillation.

6. An apparatus as set forth in claim 4 in which the diameter of said sensor magnet (38) is no more than one half the inside diameter of said sensor coil (40) and the relative movement of said sensor magnet (38) with respect to said sensor coil (40) is no more than one half the longitudinal distance of said sensor coil (40).

7. An apparatus as set forth in claim 1 in which electrical connection means (60) provide conductors (64) for transmitting signals between said first and second sensor means (34) mounted on said first and second beams (42,50) and a stationary structure means (56) not vibrated with said first and second beams (42,50), with said electrical connection means (60) having a suspended action in a half-loop shape between said beams (42,50) and said stationary structure means (56).

8. A method of constructing an apparatus (10) for measuring the mass flow rate of a fluid comprising two sensor systems (34), each having two sensor components (38,40) for detecting Coriolis forces, said apparatus also comprising two flow conduits (14,14′), each mounted to permit a length thereof to oscillate (a) about a first axis (B-B, B′-B′) for said flow conduit (14,14′) and (b) as one tine of a tuning fork in cooperation with the other flow conduit about a second axis (W-W, W′-W′), which is the axis about which the conduit is forced to oscillate, one of the two sensor components (38,40) from each sensor system (34) being mounted on a respective one of two beam structures (42,50) such that the respective aggregate centers of gravity for each of said beam structures (42,50) with two mounted sensor components (38,40) is positioned substantially on the first axes (B-B, B′-B′) of the attached flow conduits (14,14′) about which generated Coriolis forces act when fluid is flowing through the conduits (14,14′), characterised by attaching each of the resulting beam structures (42,50) with two sensor components (38,40) mounted thereon to a respective one of said flow conduits (14,14′) in a manner such that the respective aggregate centers of gravity of said beam structures (42,50) with mounted sensor components (38,40) thereon, lie at equal distances from the respective axes (W-W, W′-W′) about which the lengths of the attached conduits (14,14′) are forced to oscillate.

## Patentansprüche

1. Gerät (10) zur Messung des Massendurchflusses (Durchflußrate) eines Fluid mit zwei Durchflußleitungen (14,14′), die je mit je einem Abschnitt jeder Durchflußleitung (14,14′), durch welche das zu messende Fluid strömt, schwingungsfähig montiert sind, welches umfaßt:
a) ein erstes Sensorelement (34) zum Erfassen der durch Corioliskraft hervorgerufenen Verformungen der Durchflußleitungen (14,14′), wobei das erste Sensorelement (34) wenigstens zwei Sensorbestandteile (38,40) aufweist;
b) ein zweites Sensorelement (34) zum Erfassen der durch Corioliskraft hervorgerufenen Verformungen der Durchflußleitungen (14,14′), wobei das zweite Sensorelement (34) wenigstens zwei Sensorbestandteile (38,40) aufweist;
c) eine erste Schiene (50), an deren entgegengesetzten Enden ein erster Sensorbestandteil (40) und ein zweiter Sensorbestandteil (40) angebracht sind;
d) eine zweite Schiene (42), an deren entgegengesetzen Enden ein erster Sensorbestandteil (38) und ein zweiter Sensorbestandteil (38) angebracht sind;
e) Befestigungsmittel zum Anbringen der ersten Schiene (50) an einer ersten Durchflußleitung (14′) dergestalt, daß die Stellen, an denen die erste Schiene (50) an der ersten Durchflußleitung (14′) angebracht ist, in im wesentlichen gleichen Abständen zu der Achse (W′-W′), um welche die erste Durchflußleitung (14′) zwangsweise schwingt, liegen;
f) Befestigungsmittel zum Anbringen der zweiten Schiene (42) an einer zweiten Durchflußleitung (14) dergestalt, daß die Stellen, an denen die zweite Schiene (42) an der zweiten Durchflußleitung (14) angebracht ist, in im wesentlichen gleichen Abständen zu der Achse (W-W), um welche die zweite Durchflußleitung (14) zwangsweise schwingt, liegen;
g) den Schwerpunkt der ersten Schiene (50) in Verbindung mit den ersten und zweiten Sensorbestandteilen (40) im wesentlichen auf der Achse (B′-B′) angeordnet, um welche erzeugte Corioliskräfte wirken; und
h) den Schwerpunkt der zweiten Schiene (42) in Verbindung mit den ersten und zweiten Sensorbestandteilen im wesentlichen auf der Achse (B-B) angeordnet, um welche erzeugte Corioliskräfte wirken,
**dadurch gekennzeichnet**,
(A) die ersten Sensorbestandteile (38,40) im wesentlichen gleiche Massen haben;
(B) die zweiten Sensorbestandteile (38,40) im wesentlichen gleiche Massen haben;
(C) die zweite Schiene (42) eine Masse hat, die im wesentlichen gleich derjenigen der ersten Schiene (50) ist;
(D) die ersten Abstände und die zweiten Abstände im wesentlichen gleich sind; und
(E) die Schwerpunkte in gleichen Abständen zu den entsprechenden Achsen (W-W, W′-W′) liegen, um welche die Leitungen zwangsweise schwingen.

2. Gerät nach Anspruch 1, bei dem eine Antriebsspule (52) in der Mitte der ersten Schiene (50) angebracht ist, so daß der Schwerpunkt der Schiene (50) in Verbindung mit den ersten und den zweiten Sensorbestandteilen (40) sowie der Antriebsspule (52) im wesentlichen auf der Achse (B′-B′) angeordnet ist, um welche erzeugte Corioliskräfte wirken, und ein Antriebsmagnet (44), dessen Masse im wesentlichen gleich der Masse der Antriebsspule (52) ist, in der Mitte der zweiten Schiene (42) angebracht ist, so daß der Schwerpunkt der zweiten Schiene (42) in Verbindung mit den ersten und zweiten Sensorbestandteilen (38) und dem Antriebsmagnet (44) im wesentlichen auf der Achse (B-B) angeordnet ist, um welche die Corioliskraft wirkt.

3. Gerät nach Anspruch 1, bei dem das erste Sensorelement (34) einen ersten Sensormagneten (38) und eine erste Sensorspule (40) umfaßt, wobei die erste Sensorspule (40) und der erste Sensormagnet (38) im wesentlichen gleiche Massen haben und das zweite Sensorelement (34) einen zweiten Sensormagneten (38) und eine zweite Sensorspule (40) umfaßt, wobei die zweite Sensorspule (40) und der zweite Sensormagnet (38) im wesentlichen gleiche Massen haben.

4. Gerät nach Anspruch 3, bei dem nur ein Pol eines Sensormagneten (38) in eine Sensorspule (40) eintaucht und ein elektrisches Signal in der Sensorspule (40) erzeugt.

5. Gerät nach Anspruch 1, bei dem die Positionen der ersten und zweiten Sensorbestandteile (38,40) auf sowohl der ersten Schiene (50) als auch der zweiten Schiene (42) so gewählt sind, daß die Resonanzfrequenz der ersten Durchflußleitung und der zweiten Durchflußleitung (14,14′) um die Achsen (B-B, B′-B′), an denen erzeugte Corioliskräfte wirken, höher ist und keine harmonische ist bezüglich der Resonanzfrequenz um die Achsen (W-W, W′-W′), um welche die erste und die zweite Durchflußleitung (14,14′) zum Schwingen angetrieben werden.

6. Gerät nach Anspruch 4, bei dem der Durchmesser des Sensormagneten (38) nicht größer ist als der halbe Innendurchmesser der Sensorspule (40) und die Relativbewegung des Sensormagneten (38) bezüglich der Sensorspule (40) nicht größer als eine halbe Längsabmessung der Sensorspule (40) ist.

7. Gerät nach Anspruch 1, bei denen elektrische Verbindungsmittel (60) Leiter (64) umfassen, welche Signale zwischen dem ersten und dem zweiten Sensorelement (34), welche auf der ersten und der zweiten Schiene (42,50) angebracht sind, und einem ortsfesten Strukturelement (56) übermitteln, wobei die elektrischen Verbindungsmittel (60) halbschleifenförmig zwischen den Schienen (42,50) und dem ortsfesten Strukturelement (56) aufgehängt sind.

8. Verfahren zur Herstellung eines Geräts (10) zum Messen des Massendurchflusses eines Fluid, welches zwei Sensorsysteme (34) aufweist, von denen jedes zwei Sensorbestandteile (38,40) zum Erfassen von Corioliskräften hat, wobei das Gerät weiter zwei Durchflußleitungen (14,14′) umfaßt, die jeweils so montiert sind, daß sie einen Längsabschnitt (a) um eine erste Achse (B-B,B′-B′) für die Durchflußleitung (14,14′) und (b) als eine Zinke einer Stimmgabel im Zusammenwirken mit der anderen Durchflußleitung um eine zweite Achse (W-W,W′-W′) schwingen lassen, um welche die Leitung zwangsweise schwingt, wobei einer der beiden Sensorbestandteile (38,40) von jedem Sensorsystem (34) auf einer entsprechenden Schienenstruktur von zwei Schienenstrukturen (42,50) so montiert ist, daß die entsprechenden resultierenden Schwerpunkte jeder der Schienenstrukturen (42,50) mit zwei angebrachten Sensorbestandteilen (38,40) im wesentlichen auf der ersten Achse (B-B, B′-B′) der angebrachten Durchflußleitungen (14,14′) positioniert sind, um welche erzeugte Corioliskräfte wirken, wenn Fluid durch die Leitungen (14,14′) strömt,
**gekennzeichnet durch**
ein Anbringen jeder der resultierenden Schienenstrukturen (42,50) mit zwei an ihnen angebrachten Sensorbestandteilen (38,40) an einer der Durchflußleitungen (14,14′) dergestalt, daß die entsprechenden resultierenden Schwerpunkte der Schienenstrukturen (42,50) mit an ihnen montierten Sensorbestandteilen (38,40) in gleichen Abständen zu den entsprechenden Achsen (W-W, W′-W′)liegen, um welche die Längenabschnitte der angebrachten Leitungen (14,14′) zwangsweise schwingen.

## Revendications

1. Appareil (10) de mesure du début de masse d'un fluide, ayant deux conduits de flux ( 14, 14′) montés de façon à ce qu'oscille un segment de chacun desdits conduits de flux (14, 14′) dans lesquels s'écoule le fluide à mesurer, comportant:
a) un premier moyen de détection (34) pour détecter des distorsions desdits conduits de flux (14, 14′) induites par des forces de Coriolis, ledit premier moyen de détection (34) ayant au moins deux composants de moyen de détection (38, 40);
b) un second moyen de détection (34) pour détecter des distorsions desdits conduits de flux (14, 14′) induites par des forces de Coriolis, ledit second moyen de détection (34) ayant au moins deux composants de moyen de détection (38, 40);
c) une première barre (50) sur laquelle sont fixés, aux extrémités opposées, un premier composant de moyen.de détection (40) et un second composant de moyen de détection (40);
d) une seconde barre (42) sur laquelle sont fixés, aux extrémités opposées, un premier composant de moyen de détection (38) et un second composant de moyen de détection (38);
e) un moyen pour fixer ladite première barre (50) à un premier conduit de flux (14′) de telle façon que les points de fixation de ladite première barre (50) audit premier conduit de flux (14′) soient sensiblement à une première égale distance de l'axe (W′-W′) autour duquel ledit premier conduit de flux (14′)est contraint d'osciller;
f) un moyen pour fixer ladite seconde barre (42) à un second conduit de flux (14) de telle façon que les points de fixation de ladite seconde barre (42) audit second conduit de flux (14) soient sensiblement à une seconde égale distance de l'axe (W-W) autour duquel ledit second conduit de flux (14) est contraint d'osciller;
g) le centre de gravité de l'ensemble formé par ladite première barre (50) et lesdits premier et second composants de moyen de détection (40) se trouve sensiblement sur l'axe (B′-B′) autour duquel s'exercent des forces de Coriolis générées; et
h) le centre de gravité de l'ensemble formé par ladite seconde barre (42) et lesdits premier et second modules de moyen de détection (38) se trouve sensiblement sur l'axe (B-B) autour duquel s'exercent des forces de Coriolis générées;
caractérisé en ce que
(A) lesdits premiers composants de moyens de détection (38, 40) ont des masses sensiblement égales;
(B) lesdits seconds composants de moyens de détection (38, 40) ont des masses sensiblement égales;
(C) ladite seconde barre (42) a une masse sensiblement égale à celle de ladite première barre (50);
(D) lesdites première et seconde distances sont sensiblement égales;
(E) lesdits centres de gravité se trouvent respectivement à égale distance des axes respectifs (W-W, W′-W′) autour desquels les conduits sont contraints d'osciller.

2. Appareil tel que défini dans la revendication 1, dans lequel une bobine de commande (52) est fixée au milieu de ladite première barre (50) de telle manière que le centre de gravité de l'ensemble formé par ladite première barre (50) et lesdits premier et second composants de moyen de détection (40) et de ladite bobine de commande (52) se trouve sensiblement sur l'axe (B′-B′) autour duquel s'exercent des forces de Coriolis générées, et un aimant de commande (44), ayant une masse sensiblement égale à la masse de ladite bobine de commande (52), est fixé au milieu de ladite seconde barre (42) de telle manière que le centre de gravité de l'ensemble formé par ladite seconde barre (42) et lesdits premier et second modules de moyen de détection (38) et ledit aimant de commande (44) se trouve sensiblement sur l'axe (B-B) sur lequel s'exercent des forces de Coriolis générées.

3. Appareil tel que défini dans la revendication 1, dans lequel ledit premier moyen de détection (34) comprend un premier aimant de détection (38) et une première bobine de détection (40), ladite première bobine de détection (40) et ledit premier aimant de détection (38) ayant des masses sensiblement égales; et ledit second moyen de détection (34) comprend un second aimant de détection (38) et une seconde bobine de détection (40), ladite seconde bobine de détection (40) et ledit second aimant de détection (38) ayant des masses sensiblement égales.

4. Appareil tel que défini dans la revendication 3, dans lequel un seul pôle d'un aimant de détection (38) pénètre dans une bobine de détection (40) et génère un signal électrique dans ladite bobine de détection (40).

5. Appareil tel que défini dans la revendication 1, dans lequel les emplacements desdits premier et second composants de moyen de détection (38, 40) sont sélectionnés sur lesdites première et seconde barres (42, 50) de telle manière que la fréquence de résonance desdits premier et second conduits de flux (14, 14′) autour des axes (B-B, B′-B′) sur lesquels s'exercent des forces de Coriolis générées est supérieure et non harmonique par rapport à la fréquence de résonance autour des axes (W-W, W′-W′) autour desquels les premiers et second conduits de flux (14, 14′) sont mis en oscillation.

6. Appareil tel que défini dans la revendication 4, dans lequel le diamètre dudit aimant de détection (38) est inférieur ou égal à la moitié du diamètre interne de ladite bobine de détection (40) et le mouvement relatif dudit aimant de détection (38) par rapport à ladite bobine de détection (40) est inférieur ou égal à la dimension longitudinale de ladite bobine de détection (40).

7. Appareil tel que défini dans la revendication 1, dans lequel des moyens de connexion électrique (60) sont constitués de con ducteurs (64) pour transmettre des signaux entre lesdits premier et second moyens de détection(34) montés sur lesdites première et seconde barres (42, 50) et sur une structure fixe (56) non vibrante par rapport auxdites première et seconde barres (42, 50), lesdits moyens de connexion (60) étant en suspension en forme de demi-boucle entre lesdites barres (42, 50) et ladite structure fixe (56).

8. Procédé de construction d'un appareil (10) de mesure du début de masse d'un fluide comportant deux systèmes de détecteurs (34), chacun ayant deux composants de détecteurs (38, 40) pour détecter des forces de Coriolis, ledit appareil comportant également deux conduits de flux (14, 14′), chacun étant monté de façon à permettre l'oscillation d'un segment de conduit (a) autour d'un premier axe (B-B, B′-B′) dudit conduit de flux (14, 14′) et (b) comme une branche d'un diapason en relation avec l'autre conduit de flux autour d'un second axe (W-W, W′-W′), qui est l'axe autour duquel le conduit de flux est contraint d'osciller, un des deux composants de détecteur (38, 40) de chaque système de détecteurs (34) étant fixé sur une des deux structures à barre (42, 50) de telle façon que les centres de gravité respectifs de chacun des ensembles formés par lesdites structures à barre (42, 50), sur lesquelles sont fixés deux composants de détecteurs (38, 40), se trouvent sensiblement sur les premiers axes (B-B, B′-B′) des conduits de flux (14, 14′) fixés sur lesquels s'exercent des forces de Coriolis générées quand un fluide circule dans les conduits (14, 14′), caractérisé en ce que la fixation de chacune des structures à barre (42, 50) résultantes, sur lesquelles sont fixés deux composants de détecteurs (38, 40), à l'un desdits conduits de flux (14, 14′) est réalisée de telle manière que les centres de gravité respectifs des ensembles formés par lesdites structures à barre (42, 50), sur lesquelles sont fixés des composants de détecteurs (38, 40), se trouvent à égale distance des axes respectifs (W-W, W′-W′) autour desquels les segments des conduits fixés (14, 14′) sont contraints d'osciller.
